# EUROPEAN PATENT SPECIFICATION

(11) **EP 2 706 208 B1**
(45) Date of publication and mention of the grant of the patent: **27.07.2016**
(21) Application number: 13183254.5
(22) Date of filing: 05.09.2013
(51) Int. Cl.: F01N 3/20

(54) **A fluid feeding device for an exhaust system of an internal combustion diesel engine provided with exhaust gas after-treatment**
Flüssigkeitszuführsystem für ein Abgasreinigungssystem eines Diesel-Verbrennungsmotor mit Abgasreinigung
Dispositif d'alimentation de fluides pour moteur diesel à combustion interne avec purification de gaz d'échappement

(30) Priority: 05.09.2012 IT BO20120469
(43) Date of publication of application: 12.03.2014
(73) Proprietor: Magneti Marelli S.p.A., 20011 Corbetta (MI) (IT)
(72) Inventor: Osbat, Giovanni, 48025 RIOLO TERME (IT); De Cesare, Matteo, 71017 TORREMAGGIORE (IT)
(74) Representative: Maccagnan, Matteo

(56) References cited:
- EP-A2- 1 043 495
- DE-A1-102010 004 614
- DE-A1-102010 024 554

## Description

The present invention relates to a diesel exhaust fluid feeding device for an exhaust system of an internal combustion engine provided with exhaust gas after-treatment, in particular for feeding a water solution of urea.

As known, future international standards related to the containment of automotive polluting gas emissions (the so-called "Euro 5" and "Euro 6" or "Tier 2 Bin 5" standards) will contemplate a very low limit for the NOₓ molecules which may be released into the atmosphere.

Respecting such limits is particularly critical, especially for diesel engines; for such a reason, it has been suggested to equip the exhaust system of a diesel engine with a further SCR (Selective Catalytic Reduction) catalyzer suited to convert the NOₓ (NO₂ or NO) molecules into nitrogen (N₂), which is an inert gas, and water (H₂O). The reduction reaction of NOₓ molecules into nitrogen (N) is difficult to obtain without using an appropriate reducing agent, which is generally ammonia (NH₃) . The reducing agent must be injected into the exhaust system upstream of the SCR catalyzer in order to be mixed with the exhaust gases before entering the SCR catalyzer.

However, storing ammonia within a car is not advisable due to evident safety reasons related to the fact that ammonia is toxic. Consequently, it has been suggested to store and inject a water solution of urea, because urea is broken down into ammonia by effect of the exhaust gas heat and in part also by catalytic effect.

The present invention is thus advantageously applied to motor vehicles, such as trucks, semi-trailers etc. The feeding device comprises an exhaust duct, a tank containing a water solution of urea and an electromagnetic injector, which is provided to inject the pressurized water solution of urea from the tank into the exhaust duct. The feeding device, comprises, in turn, a pump which draws from the tank to feed the water solution of urea and send it pressurized to the electromagnetic injector and is embedded in the tank; a cylindrical symmetric element for heating the water solution of urea and a filtering element provided with a body, also with an essentially cylindrical symmetry, are arranged outside the pump.

Because the components of motor vehicles, such as trucks and semi-trailers, must be qualified for a working life of 1.5 million kilometers, maintenance operations are needed to replace or repair some elements (typically, for example, the filtering element). Since the feeding device is nearly entirely embedded in the tank of the pressurized water solution of urea, such
operations are rather complex and costly in terms of time because the tank of the water solution of urea is difficult to access and inspect.

In order to overcome these drawbacks, feeding devices provided with a shaped support made to support the assembly formed by the pump, the heating body and the cartridge filter, in which the support plate is arranged outside the tank at an opening obtained in the lower part of the tank, have been suggested. The support plate essentially engages the opening so that the pump, the heating body and the cartridge filter are embedded within the tank. For example, document DE-A-102010024554 discloses a feeding device of the above described type.

However, the feeding device of the type described above has some disadvantages, and in particular does not solve the problem of facilitating maintenance operations for replacement or repairing some elements (typically, for example, the filtering element) of the feeding device.

It is an object of the present invention to provide a feeding device for an exhaust system of an internal combustion engine provided with exhaust gas after-treatment, in particular for feeding a water solution of urea which is free from the drawback of the prior art and which is easy and cost-effective to make and which in particular allows to simplify maintenance operations for replacing or repairing some elements of the feeding device itself.

In accordance with the present invention a feeding device for an exhaust system of an internal combustion engine is provided as disclosed in the appended claims.

The present invention will now be described with reference to the accompanying drawings, which show a non-limitative embodiment thereof, in which:
- figure 1 is a diagrammatic view of an exhaust system of an internal combustion engine provided with exhaust gas after-treatment;
- figure 2 is a diagrammatic, section view of a first embodiment of the feeding device for an exhaust system of an internal combustion engine provided with exhaust gas after-treatment in figure 1; and
- figure 3 is a diagrammatic, section view of a second embodiment of the feeding device for an exhaust system of an internal combustion engine provided with exhaust gas after-treatment in figure 1.

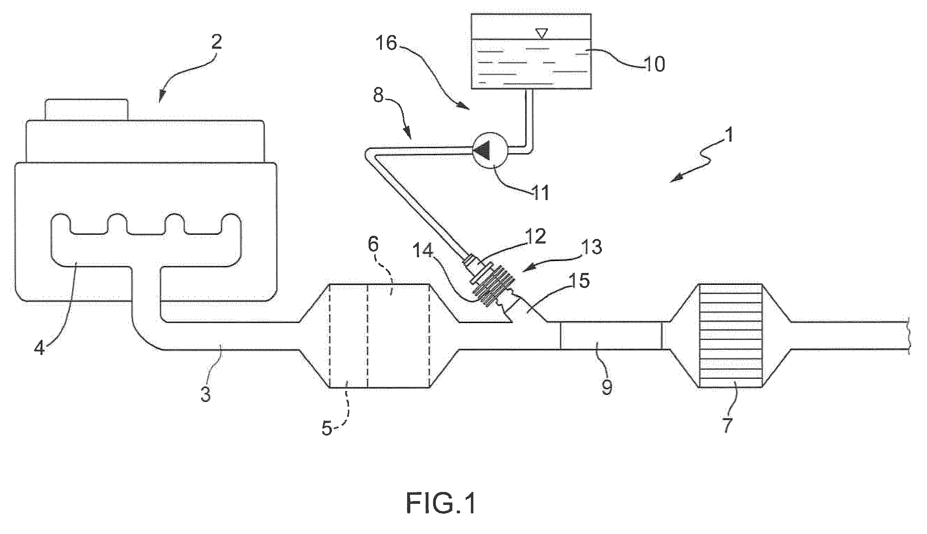

In figure 1, numeral 1 indicates as a whole an exhaust system of an internal combustion engine 2 working in accordance with the "diesel" cycle (i.e. fed with diesel fuel or the like).

The exhaust system 1 emits the gases produced by combustion into the atmosphere and comprises an exhaust duct 3 which departs from an exhaust manifold 4 of the internal combustion engine 2. An oxidizing catalyzer 5 and a particulate trap 6 are arranged along the exhaust duct 3. In figure 1, the oxidizing catalyzer 5 and the particulate trap 6 are arranged in sequence in a same common tubular container.

Furthermore, an SCR (Selective Catalytic Reduction) catalytic system 7 for the post-treatment of the NOₓ molecules (NO and NO₂) is arranged along the exhaust duct 3 and downstream of the oxidizing catalyzer 5. According to a variant shown in figure 1, the SCR catalyzer system 7 comprises a single SCR catalyzer 7. According to a further variant (not shown), the SCR catalyzer system 7 comprises a set (normally three) of catalyzers, which together optimize the SCR function for post-treatment of NOₓ molecules.

An injection device 8, coupled to the exhaust duct 3 immediately upstream of catalytic system 7, is provided and suited to inject a reducing additive, and specifically a water solution of urea (i.e. a solution of urea and water) into the exhaust duct 3 itself. In use, by effect of the heat of the exhaust gases present inside the exhaust duct 3, the urea injected into the exhaust duct 3 itself spontaneously breaks down into isocyanic acid (HNCO) and ammonia (NH₃), which works as a reducing agent in the catalytic system 7 to promote the breakdown reaction of the NOₓ molecules into nitrogen (N₂) and water (H₂O).

According to a preferred embodiment, a static mixer 9 is inserted along the exhaust duct 3 and at the injection device 8, which mixer has the function of generating turbulences in the exhaust gases present inside exhaust duct 3 in order to prevent the localized thickening of the isocyanic acid (which is formed during the urea breakdown) and thus to prevent the polymerization of the isocyanic acid itself and to increase the efficiency of the catalytic system 7, by making the dispersion of ammonia more homogenous in the exhaust gases. According to the variant shown in figure 1, the static mixer 9 is arranged downstream of the injector device 8. According to a further variant (not shown), the static mixer 9 is arranged upstream of the injector device 8.

The injection device 8 comprises a tank 10 containing the water solution of urea, and a pump 11, which draws from the tank 10 to feed the pressurized water solution of urea to an electromagnetic injector 12 of known type suited to inject the pressurized water solution of urea into the exhaust duct 3.

The electromagnetic injector 12 is fixed to the exhaust duct 3 by means of a connection device 13 which comprises a tubular support body 14, which is made of thermally conductive material (typically steel), accommodates within the electromagnetic injector 12, and at a lower end thereof is suited to be butt-coupled to a connection pipe 15 which laterally and obliquely projects from the exhaust duct 3.

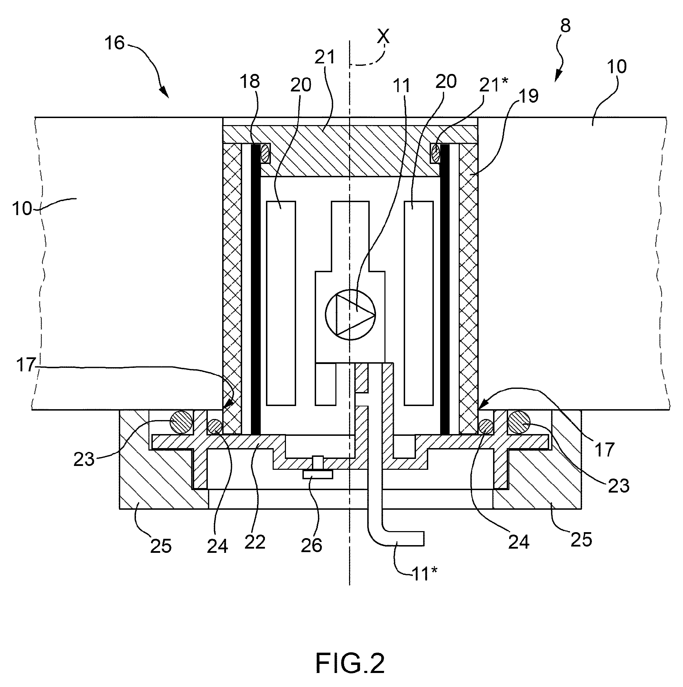

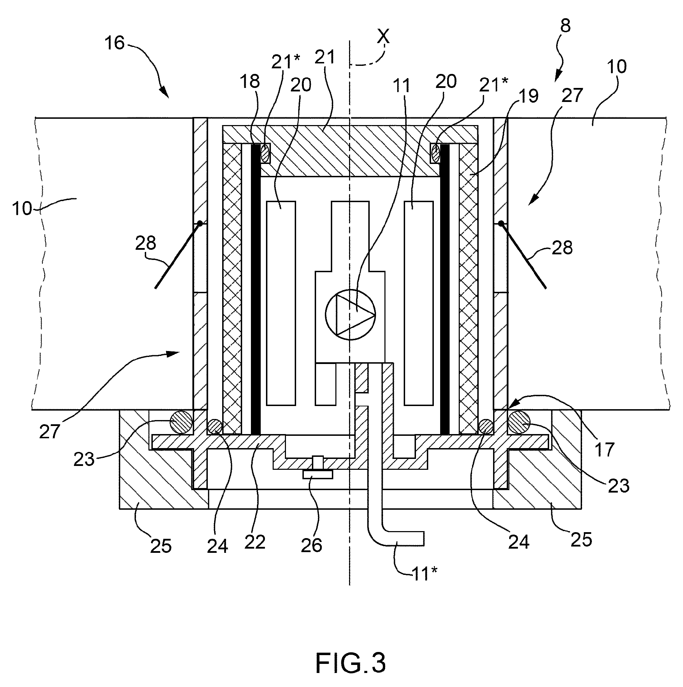

As shown in greater detail in figures 2 and 3, the injection device 8 comprises a feeding device 16 which comprises, in turn a tank 10 containing the water solution of urea, the pump 11 which draws from the tank 10 to feed the pressurized water solution of urea to the electromagnetic injector 12, which is in turn provided to inject the water solution of urea into the exhaust duct 3.

The feeding device 16 thus comprises a pump 11 which is embedded in the tank 10 and is fitted in the tank 10 from the bottom, i.e. through an opening 17 obtained in a lower wall of the tank 10. The pump 11 which draws from the tank 10 is provided to feed the pressurized water solution of urea 12 through an outlet duct 11*.

The feeding device 16 further comprises a heating body 18. The heating body 18 has an essentially cylindrical shape and is provided with an axis X. The heating body 18 is also embedded in the tank 10. The heating body 18 is arranged so as to entirely surround the pump 11. In other words, the heating body 18 has a dimension (in particular a height) which essentially approximates the dimensions of the pump 11; the heating body 18 is thus accommodated within the tank 10 so as to surround the pump 11. The heating body 18 is made of metal material or ceramic material or other thermally conducting material.

Resistive tracks (not shown) provided with appropriate connection terminals (not shown) are embedded in the heating body 18. The resistive tracks are obviously made of a conductive material and electrically connected to a power unit at the connection terminals. In use, by Joule effect, the passage of current in the resistive tracks leads to a uniform heating in the entire heating body 18. In this manner, the urea which is interposed between the heating body 18 and the pump 11 is heated in uniform manner.

The feeding device 16 further comprises a cartridge filter 19. The cartridge filter 19 is essentially cylindrical and coaxial to axis X. The cartridge filter 19 is also embedded in the tank 10. The cartridge filter 19 is arranged so as to entirely surround the pump 11. In other words, the heating body 18 has a dimension (in particular, a height) which essentially approximates the dimensions of the pump 11; the cartridge filter 19 is thus accommodated in the tank 10 so as to surround the pump 11.

According to a first variant, shown in figures 2 and 3, the heating body 18 is interposed between the pump 11 and the cartridge filter 19. In other words, the cartridge filter 19 is arranged coaxial to the heating body 18 and outside the heating body 18. In this manner, the pressurized water solution of urea contained in the tank 10 is firstly filtered by means of the cartridge filter 19 and then passes through the heating body 18 to reach the pump which is arranged to feed the pressurized water solution of urea into the electromagnetic injector 12.

According to a second variant (not shown), the cartridge filter 9 is interposed between the pump 11 and the heating body 18. In other words, the cartridge filter 19 is arranged coaxial to the heating body 18 and inside the heating body 18. In this manner, the pressurized water solution of urea contained in the tank 10 firstly passes through the heating body 19 and then is filtered by means of the cartridge filter 19 to reach the pump 11 which is arranged to feed the pressurized water solution of urea into the electromagnetic injector 12.

As shown in figures 2 and 3, to allow the passage of the water solution of urea through the heating body 18, the latter is provided with a number of through openings 20 obtained to allow the passage towards the pump 11. In particular, the heating body 18 comprises a number of through openings 20 uniformity distributed about axis X. According to a preferred embodiment, the heating body 18 comprises a number of oblong or circular-shaped through openings 20.

The feeding device 16 then comprises an upper loading plug 21 of the assembly formed by the heating body 18 and the cartridge filter 19.

As shown in figures 2 and 3, a sealing o-ring 21* (of known type) is arranged between the plug 21 and the heating body 18.

The feeding device 16 comprises a shaped support plate 22 made to support the assembly formed by the pump 11, by the heating body 18 and by the cartridge filter 19. The support plate 21 is arranged outside the tank 11 at the opening 17 obtained in the lower wall of the tank 10. The support plate 21 essentially engages the opening 17 so that the pump 11, the heating body 18 and the cartridge filter 19 are embedded in the tank.

A sealing o-ring 23 (of known type) is arranged between the lower wall of the tank 10 and the support plate 22.

As shown in figures 2 and 3, a sealing o-ring 24 (of known type) is interposed between the support plate 21 and the cartridge filter 19.

The feeding device 16 finally comprises a flange 25 which is coupled in use to the plug 21 to allow to connect the feeding device 16 to the tank 10.

Finally, the support plate 22 also comprises a draining plug 26 which is arranged to allow an either total or partial emptying of the tank 10.

According to a variant (not shown) the feeding device 16 further comprises a valve (of known type) which is provided to allow the entrance of air during the step of defrosting of the urea solution. In this manner, it is possible to avoid the occurrence of undesired cavitation phenomena of the pump 11 caused by the reduction of volume of the urea solution in the passage from the solid state to the liquid state. According to a preferred embodiment (not shown), the valve is arranged at the support plate 22.

In use, when a maintenance procedure on the feeding device 16 is required (e.g. to replace the cartridge filter 19), the operator firstly removes the flange 25 and then empties the water solution of urea from the tank 10 through the draining plug 26. Once the tank 10 has been entirely emptied, the feeding device 16 can be removed (pulling it out from the bottom) of the tank 10 itself to perform the required operations.

After having completed the necessary operations, the operator may easily connect the feeding device 16 again by inserting the assembly formed by the pump 11, the heating body 18 and the cartridge filter 19 into the tank 10. After having appropriately closed the draining plug 26 and having also connected the flange 25, the operator may thus proceed by filling the tank 10 with the water solution of urea.

The feeding device 16 illustrated in figure 3 is similar to that shown in figure 2 and the corresponding parts are identified using the same reference numbers where possible.

According to the variant shown in figure 3, the support plate 21 carries a separating element 27 connected to it. The separating element 27 projects from the surface of the support plate 21 and essentially comprises a cylindrical symmetry body. According to a preferred variant, the separating element 27 is arranged coaxial to axis X. The separating element 27 is also embedded, when in use, in the tank 10. The separating element 27 is arranged so as to be arranged outside and to surround the assembly formed by the pump 11, by the heating body 18 and by the cartridge filter 19 completely. In other words, the separating element 27 has a dimension (in particular, a height) which essentially approximates by defect the dimensions of the tank 10. The separating element 27 comprises a number of lateral through openings, each of which may be closed by a respective bulkhead 28. The bulkheads 28, as the through openings, are uniformly distributed/opened about axis X. The bulkheads 28 are mobile between a first end position, in which the passage of water solution of urea is allowed completely through the through openings towards the assembly formed by the pump 11, by the heating body 18 and the cartridge filter 19, and a second end position, in which the passage of water solution of urea is completely prevented through the through openings towards the assembly formed by the pump 11, by the heating body 18 and by the cartridge filter 19.

In other words, the separating element 27 is provided to define two chambers in the tank 10, identified by C1 and C2, respectively; of which chamber C1 is defined in the separating element 27 itself and encloses the assembly formed by the pump 11, by the heating body 18 and by the cartridge filter 19 therein, while the chamber C2 is defined outside the separating element 27 itself.

The bulkheads 28 are made so as to allow to establish, in the first end position, hydraulic communication between chamber C1 and chamber C2 (for the passage of water solution of urea through the through openings), while in the second end position, the communication is interrupted between the two chambers C1 and C2, which are thus perfectly separated from each other.

In use, during normal operation, the bulkheads 28 are maintained in the first end position so as to allow to establish a communication between the chamber C1 and the chamber C2 and allow the passage of the water solution of urea through the through openings towards the pump 11.

When instead a maintenance procedure is necessary on the feeding device 16 (e.g. the replacement of the cartridge filter 19), firstly the bulkheads 28 are moved from the first end position to the second end position so as to interrupt the communication between chamber C1 and chamber C2 and inhibit the passage of the water solution of urea through the through openings towards the pump 11. Secondly, the operator removes the flange 25 and, then empties only chamber C1 of the tank 10 of the water solution of urea through the draining plug 26. Once the chamber C1 of the tank 10 has been entirely emptied, the feeding device 16 can be removed (pulling it out from the bottom) of the tank 10 itself to perform the required operations.

After having completed the necessary operations, the operator may easily connect the feeding device 16 again by inserting the assembly formed by the pump 11, the heating body 18 and the cartridge filter 19 inside chamber C1 into the tank 10. After having appropriately closed the draining plug 26 and having connected also the flange 25, the operator may thus proceed by filling the chamber C1 of the tank 10 with the water solution of urea.

It is apparent that according to this embodiment, the amount of water solution of urea which is wasted whenever a maintenance operation is needed on the feeding device 16 is considerably reduced because only chamber C1 and not the entire tank 10 need to be emptied.

The feeding device 16 described above has many advantages because it is simple and cost-effective to make and allows, at the same time, to considerably simplify maintenance operations.

## Claims

1. A feeding device (16) for an exhaust system (1) of an internal combustion system (2) provided with exhaust gas after-treatment; said exhaust system (1) comprises an exhaust duct (3), a tank (10), which contains a water solution of urea and is provided with an opening (17) obtained in a lower wall, and an electromagnetic injector (12), which is suited to inject the pressurized water solution of urea coming from the tank (10) into the exhaust duct (3); said feeding device (16) comprises:
a pump (11), which draws the water solution of urea from the tank (10), so as to feed the pressurized water solution of urea to the electromagnetic injector (12), and is suitable to be embedded inside the tank (10);
a heating body (18) which is suitable to be embedded inside the tank (10), is arranged outside of the pump (11) in such a way that it completely surrounds the pump (11), and is suited to heat, while in use, the urea, which is interposed between the heating body (18) and the pump (11);
a filtering element (19), which is suitable to be embedded inside the tank (10) as well, and is arranged outside of the pump (11) in such a way that it completely surrounds the pump (11); and
a support plate (22), which is designed to support the assembly consisting of the pump (11), the heating body (18), and the filtering element (19); the support plate (21) being designed to be arranged outside of the tank (10) in correspondence to the opening (17) obtained in the lower wall of the tank (10);
the feeding device (16) is **characterized in that** the support plate (22) comprises a draining plug (26), which is suited to allow the tank (10) to be completely or partially emptied, so as to allow access to the feeding device (16) itself, when a maintenance procedure is necessary.

2. A feeding device according to claim 1, wherein the support plate (22) comprises a separating element (27), which projects inside the tank (10); the separating element (27) being designed so as to be arranged outside of the assembly consisting of the pump (11), the heating body (18), and the filtering element (19) in such a way that it completely surrounds said assembly.

3. A device according to claim 2, wherein the separating element (27) is suited to define two chambers (C1, C2) inside the tank (10); a first chamber (C1) being defined inside the separating element (27) itself and enclosing, in its inside, the assembly consisting of the pump (11), the heating body (18), and the filtering element (19), and a second chamber (C2) being defined outside of the separating element (27); and wherein the separating element is designed in such a way that it can establish a communication between the first chamber (C1) and the second chamber (C2).

4. A feeding device according to claim 3, wherein the separating element (27) comprises mobile elements (28), which are mobile between a first end position, in which the water solution of urea is allowed to flow from the second chamber (C2) to the first chamber (C1), and a second end position, in which the water solution of urea is not allowed to flow from the second chamber (C2) to the first chamber (C1).

5. A feeding device according to claim 3, wherein the separating element (27) comprises a body (27) with cylindrical symmetry, which projects inside the tank (10) from a surface of the support plate (21); the separating element (27) comprises a number of lateral through openings, each of which can be closed by means of a respective bulkhead (28), which is mobile between the first end position and the second end position, and vice versa.

6. A device according to any of the previous claims, wherein the heating body (18) is arranged outside of the filtering element (19).

7. A device according to any of the previous claims, wherein the filtering element (19) is arranged outside of the heating body (18).

8. A device according to any of the previous claims, wherein the heating body (18) presents a substantially cylindrical shape, is provided with an axis (X), is made of a thermally conductive material, and comprises a number of through openings (20), which are obtained so as to allow the water solution of urea to flow towards the pump (11).

9. A device according to claim 8, wherein the through openings (20) are uniformly arranged around the axis (X).

10. A device according to claim 8 or 9, wherein resistive tracks are embedded inside the heating body (18), which are provided with electrical connection terminals and are made of an electrically conductive material, so that, while in use, the current flowing in the resistive tracks causes the entire heating body (18) to be heated.

11. A device according to any of the previous claims, wherein the heating element (19) presents a substantially cylindrical shape.

12. A device according to claim 11, wherein the filtering element (19) is arranged coaxial to the heating body (18).

13. A device according to any of the previous claims and comprising an upper plug (21) for closing the assembly consisting of the pump (11), the heating body (18), and the filtering element (19), preferably with a first sealing o-ring (21*) being interposed between said upper plug (21) and the heating body (18).

14. A device according to any of the previous claims and comprising a second sealing o-ring (23), which is interposed between the lower wall of the tank (10) and the support plate (22), and a third sealing oring (24), which is interposed between the support plate (22) and the filtering element (19).

15. A device according to any of the previous claims and comprising a valve, which is suited to allow air to be let in during the urea solution defrosting phase, so as to prevent undesired cavitation phenomena from affecting the pump (11).

16. A device according to claim 15, wherein the valve is arranged in correspondence to the support plate (22).

## Patentansprüche

1. Zuführsystem (16) für ein Abgassystem (1) eines mit Abgasreinigung ausgestatteten Verbrennungssystems (2); das Abgassystem (1) weist eine Abgasleitung (3), einen Behälter (10), der eine Harnstoffwasserlösung enthält und mit einer in einer unteren Wand erhaltenen Öffnung (17) versehen ist, und eine elektromagnetische Einspritzdüse (12), die geeignet ist, die aus dem Behälter (10) kommende, unter Druck stehende Harnstoffwasserlösung in die Abgasleitung (3) einzuspritzen, auf; das Zuführsystem (16) weist auf:
eine Pumpe (11), die die Harnstoffwasserlösung aus dem Behälter (10) zieht, um die unter Druck stehende Harnstoffwasserlösung der elektromagnetischen Einspritzdüse (12) zuzuführen, und geeignet ist, in den Behälter (10) eingebettet zu sein;
einen Heizkörper (18), der geeignet ist, in den Behälter (10) eingebettet zu sein, außerhalb der Pumpe (11) so angeordnet ist, dass er die Pumpe (11) vollständig umgibt, und geeignet ist, während des Einsatzes den Harnstoff, der sich zwischen dem Heizkörper (18) und der Pumpe (11) befindet, zu erwärmen;
ein filterndes Element (19), das geeignet ist, ebenfalls in den Behälter (10) eingebettet zu sein, und außerhalb der Pumpe (11) so angeordnet ist, dass es die Pumpe (11) vollständig umgibt; und
eine Halteplatte (22), die ausgebildet ist, um die aus der Pumpe (11), dem Heizkörper (18) und dem filternden Element (19) bestehende Anordnung zu halten; wobei die Halteplatte (21) ausgebildet ist, um außerhalb des Behälters (10) in Entsprechung zu der in der unteren Wand des Behälters (10) erhaltenen Öffnung (17) angeordnet zu sein;
das Zuführsystem (16) ist **dadurch gekennzeichnet, dass** die Halteplatte (22) einen Ablassstopfen (26) aufweist, der geeignet ist zu erlauben, dass der Behälter (10) vollständig oder teilweise geleert wird, um Zugang zum Zuführsystem (16) selbst zu erlauben, wenn eine Wartungsarbeit nötig ist.

2. Zuführsystem nach Anspruch 1, wobei die Halteplatte (22) ein trennendes Element (27), das innerhalb des Behälters (10) vorspringt, aufweist; wobei das trennende Element (27) so ausgebildet ist, dass es außerhalb der aus der Pumpe (11), dem Heizkörper (18) und dem filternden Element (19) bestehenden Anordnung so angeordnet ist, dass es jene Anordnung vollständig umgibt.

3. System nach Anspruch 2, wobei das trennende Element (27) geeignet ist, zwei Kammern (C1, C2) innerhalb des Behälters (10) festzulegen; wobei eine erste Kammer (C1) innerhalb des trennenden Elements (27) selbst festgelegt ist und in ihrem Inneren die aus der Pumpe (11), dem Heizkörper (18) und dem filternden Element (19) bestehende Anordnung einschließt und eine zweite Kammer (C2) außerhalb des trennenden Elements (27) festgelegt ist; und wobei das trennende Element so ausgebildet ist, dass es eine Kommunikation zwischen der ersten Kammer (C1) und der zweiten Kammer (C2) herstellen kann.

4. Zuführsystem nach Anspruch 3, wobei das trennende Element (27) bewegliche Elemente (28) aufweist, die zwischen einer ersten Endstellung, in der es der Harnstoffwasserlösung erlaubt wird, von der zweiten Kammer (C2) zur ersten Kammer (C1) zu strömen, und einer zweiten Endstellung, in der es der Harnstoffwasserlösung nicht erlaubt wird, von der zweiten Kammer (C2) zur ersten Kammer (C1) zu strömen, beweglich sind.

5. Zuführsystem nach Anspruch 3, wobei das trennende Element (27) einen Körper (27) mit zylindrischer Symmetrie, der innerhalb des Behälters (10) von einer Oberfläche der Halteplatte (21) vorspringt, aufweist; das trennende Element (27) weist mehrere seitliche Durchgangsöffnungen auf, von denen jede mittels einer jeweiligen Trennwand (28), die zwischen der ersten Endstellung und der zweiten Endstellung und umgekehrt beweglich ist, geschlossen werden kann.

6. System nach einem der vorangegangenen Ansprüche, wobei der Heizkörper (18) außerhalb des filternden Elements (19) angeordnet ist.

7. System nach einem der vorangegangenen Ansprüche, wobei das filternde Element (19) außerhalb des Heizkörpers (18) angeordnet ist.

8. System nach einem der vorangegangenen Ansprüche, wobei der Heizkörper (18) eine im Wesentlichen zylindrische Form besitzt, eine Achse (X) hat, aus einem Wärme leitenden Material hergestellt ist und mehrere Durchgangsöffnungen (20) aufweist, die erhalten werden, um es der Harnstoffwasserlösung zu erlauben, in Richtung der Pumpe (11) zu strömen.

9. System nach Anspruch 8, wobei die Durchgangsöffnungen (20) gleichmäßig um die Achse (X) angeordnet sind.

10. System nach Anspruch 8 oder 9, wobei in den Heizkörper (18) Widerstandsbahnen eingebettet sind, die mit elektrischen Anschlussklemmen versehen und aus einem elektrisch leitfähigen Material hergestellt sind, sodass während des Einsatzes der in den Widerstandsbahnen fließende Strom eine Erwärmung des gesamten Heizkörpers (18) verursacht.

11. System nach einem der vorangegangenen Ansprüche, wobei das Heizelement (19) eine im Wesentlichen zylindrische Form besitzt.

12. System nach Anspruch 11, wobei das filternde Element (19) achsgleich mit dem Heizkörper (18) angeordnet ist.

13. System nach einem der vorangegangenen Ansprüche und mit einem oberen Stopfen (21) zum Schließen der aus der Pumpe (11), dem Heizkörper (18) und dem filternden Element (19) bestehenden Anordnung, wobei vorzugsweise ein erster abdichtender O-Ring (21*) zwischen dem oberen Stopfen (21) und dem Heizkörper (18) angeordnet ist.

14. System nach einem der vorangegangenen Ansprüche und mit einem zweiten abdichtenden O-Ring (23), der zwischen der unteren Wand des Behälters (10) und der Halteplatte (22) angeordnet ist, und mit einem dritten abdichtenden O-Ring (24), der zwischen der Halteplatte (22) und dem filternden Element (19) angeordnet ist.

15. System nach einem der vorangegangenen Ansprüche und mit einem Ventil, das geeignet ist, während der Phase des Auftauens der Harnstofflösung Luft eintreten zu lassen, um zu verhindern, dass ein unerwünschtes Auftreten von Kavitation der Pumpe (11) schadet.

16. System nach Anspruch 15, wobei das Ventil in Entsprechung zur Halteplatte (22) angeordnet ist.

## Revendications

1. Dispositif d'alimentation (16) pour un système d'échappement (1) d'un système de combustion interne (2) doté de post-traitement de gaz d'échappement ; ledit système d'échappement (1) comprend un conduit d'échappement (3), un réservoir (10) qui contient une solution aqueuse d'urée et est prévu avec une ouverture (17) obtenue dans une paroi inférieure, et un injecteur électromagnétique (12) qui est approprié pour injecter la solution aqueuse d'urée mise sous pression provenant du réservoir (10) dans le conduit d'échappement (3) ; ledit dispositif d'alimentation (16) comprenant :
une pompe (11) qui aspire la solution aqueuse d'urée du réservoir (10) afin d'amener la solution aqueuse d'urée mise sous pression à l'injecteur électromagnétique (12), et est appropriée pour être encastrée à l'intérieur du réservoir (10),
un corps de chauffage (18) qui est approprié pour être encastré à l'intérieur du réservoir (10), est agencé à l'extérieur de la pompe (11) de sorte qu'il entoure complètement la pompe (11), et est approprié pour chauffer, pendant le fonctionnement, l'urée, qui est intercalée entre le corps de chauffage (18) et la pompe (11) ;
un élément de filtration (19) qui est approprié pour être encastré à l'intérieur du réservoir (10), et est agencé à l'extérieur de la pompe (11) de sorte qu'il entoure complètement la pompe (11) ; et
une plaque de support (22) qui est conçue pour supporter l'ensemble se composant de la pompe (11), du corps de chauffage (18) et de l'élément de filtration (19) ; la plaque de support (21) étant conçue pour être agencée à l'extérieur du réservoir (10) en correspondance avec l'ouverture (17) obtenue dans la paroi inférieure du réservoir (10) ;
le dispositif d'alimentation (16) est **caractérisé en ce que** la plaque de support (22) comprend un bouchon de drainage (26) qui est approprié pour permettre de vider complètement ou partiellement le réservoir (10), afin de permettre l'accès au dispositif d'alimentation (16) lui-même, lorsqu'une procédure d'entretien est nécessaire.

2. Dispositif d'alimentation selon la revendication 1, dans lequel la plaque de support (22) comprend un élément de séparation (27) qui fait saillie à l'intérieur du réservoir (10) ; l'élément de séparation (27) étant conçu afin d'être agencé à l'extérieur de l'ensemble se composant de la pompe (11), du corps de chauffage (18) et de l'élément de filtration (19) de sorte qu'il entoure complètement ledit ensemble.

3. Dispositif selon la revendication 2, dans lequel l'élément de séparation (27) est approprié pour définir deux chambres (C1, C2) à l'intérieur du réservoir (10) ; une première chambre (C1) étant définie à l'intérieur de l'élément de séparation (27) lui-même et enfermant, dans son intérieur, l'ensemble se composant de la pompe (11), du corps de chauffage (18) et de l'élément de filtration (19), et une deuxième chambre (C2) étant définie à l'extérieur de l'élément de séparation (27) ; et dans lequel l'élément de séparation est conçu de sorte qu'il peut établir une communication entre la première chambre (C1) et la deuxième chambre (C2).

4. Dispositif d'alimentation selon la revendication 3, dans lequel l'élément de séparation (27) comprend des éléments mobiles (28), qui sont mobiles entre une première position d'extrémité dans laquelle la solution aqueuse d'urée est autorisée à s'écouler de la deuxième chambre (C2) à la première chambre (C1), et une deuxième position d'extrémité dans laquelle la solution aqueuse d'urée n'est pas autorisée à s'écouler de la deuxième chambre (C2) à la première chambre (C1).

5. Dispositif d'alimentation selon la revendication 3, dans lequel l'élément de séparation (27) comprend un corps (27) avec une symétrie cylindrique, qui fait saillie à l'intérieur du réservoir (10) à partir d'une surface de la plaque de support (21) ; l'élément de séparation (27) comprend un certain nombre d'ouvertures débouchantes latérales, dont chacune peut être fermée au moyen d'une cloison (28) respective qui est mobile entre la première position d'extrémité et la deuxième position d'extrémité, et vice versa.

6. Dispositif selon l'une quelconque des revendications précédentes, dans lequel le corps de chauffage (18) est agencé à l'extérieur de l'élément de filtration (19).

7. Dispositif selon l'une quelconque des revendications précédentes, dans lequel l'élément de filtration (19) est agencé à l'extérieur du corps de chauffage (18).

8. Dispositif selon l'une quelconque des revendications précédentes, dans lequel le corps de chauffage (18) présente une forme sensiblement cylindrique, est prévu avec un axe (X), est réalisé en un matériau thermiquement conducteur, et comprend un certain nombre d'ouvertures débouchantes (20), qui sont obtenues pour permettre à la solution aqueuse d'urée de s'écouler vers la pompe (11).

9. Dispositif selon la revendication 8, dans lequel les ouvertures débouchantes (20) sont uniformément agencées autour de l'axe (X).

10. Dispositif selon la revendication 8 ou 9, dans lequel des voies résistives qui sont encastrées à l'intérieur du corps de chauffage (18), sont munies de bornes de raccordement électriques et sont réalisées en un matériau électriquement conducteur de sorte que, pendant le fonctionnement, le courant circulant dans les voies résistives provoque le chauffage de tout le corps de chauffage (18).

11. Dispositif selon l'une quelconque des revendications précédentes, dans lequel l'élément de chauffage (19) présente une forme sensiblement cylindrique.

12. Dispositif selon la revendication 11, dans lequel l'élément de filtration (19) est agencé de manière coaxiale par rapport au corps de chauffage (18).

13. Dispositif selon l'une quelconque des revendications précédentes et comprenant un bouchon supérieur (21) pour fermer l'ensemble se composant de la pompe (11), du corps de chauffage (18) et de l'élément de filtration (19), de préférence avec un premier joint torique d'étanchéité (21*) qui est intercalé entre ledit bouchon supérieur (21) et le corps de chauffage (18).

14. Dispositif selon l'une quelconque des revendications précédentes et comprenant un deuxième joint torique d'étanchéité (23) qui est intercalé entre la paroi inférieure du réservoir (10) et la plaque de support (22), et un troisième joint torique d'étanchéité (24) qui est intercalé entre la plaque de support (22) et l'élément de filtration (19).

15. Dispositif selon l'une quelconque des revendications précédentes et comprenant une valve, qui est appropriée pour permettre l'entrée de l'air pendant la phase de dégivrage de la solution d'urée, afin d'empêcher le phénomène de cavitation indésiré d'affecter la pompe (11).

16. Dispositif selon la revendication 15, dans lequel la valve est agencée de manière correspondante à la plaque de support (22).
